# EUROPÄISCHE PATENTSCHRIFT

(11) **EP 0 718 179 B1**
(45) Veröffentlichungstag und Bekanntmachung des Hinweises auf die Patenterteilung: **20.05.1998**
(21) Anmeldenummer: 95120288.6
(22) Anmeldetag: 21.12.1995
(51) Int. Cl.: B62D 65/00

(54) **Bearbeitungsanlage für Werkstücke**
Machining installation for workpieces
Installation pour l'usinage de pièces

(30) Priorität: 23.12.1994 DE 4446420
(43) Veröffentlichungstag der Anmeldung: 26.06.1996
(73) Patentinhaber: INDUMAT GmbH & Co. KG Transport- und Lagersysteme, D-72770 Reutlingen (DE)
(72) Erfinder: Kurzweil, Robert, D-72147 Nehren (DE); Krug, Peter, D-72770 Reutlingen (DE); Wadepohl, Wolfram, Dipl.-Ing., D-72762 Reutlingen (DE); Hipp, Martin, Dipl.-Ing., D-72760 Reutlingen (DE)
(74) Vertreter: Kasseckert, Rainer

(56) Entgegenhaltungen:
- EP-A- 0 345 826
- TECHNISCHE RUNDSCHAU, Bd. 79, Nr. 36, 4.September 1987 BERN, CH, Seiten 66-67,

## Beschreibung

Die Erfindung betrifft eine Bearbeitungsanlage für Werkstücke, wie z.B. für PKW-Karossen nach dem Oberbegriff des Anspruchs 1.

Aus der DE 40 20 286 C2 ist eine Bearbeitungsanlage für Werkstücke, wie z.B. PKW-Karossen mit einer Bearbeitungslinie bekannt, die von einer Vielzahl von Bearbeitungsplattformen (fahrerlosen Transportfahrzeugen) gebildet wird, die je einen Eigenantrieb und eine dazugehörige Steuerung haben. Sie bilden in den Bearbeitungslinie lückenlos aneinanderliegend einen Schubverband und bewegen sich in den anderen Bereichen selbstfahrend fort.

Aus der Zeitschrift: Technische Rundschau, Band 79, Nr. 36, 4. September 1987, Bern, Schweiz, Seiten 66 bis 67 ist eine "Universelle Steuerung für flexible Transportsystem" bekannt, bei der ein Leitrechner eine Mehrzahl an fahrerlosen Transportfahrzeugen steuert. Die Topologieinformationen (beispielsweise die Lage der Weichen und Kreuzungen, die Anordnungen von Übergabe- und Übernahmestationen und anderes mehr) sind nicht in den Fahrzeugen, sondern nur im Leitrechner gespeichert, so daß die Fahrzeuge relativ preiswert ausgestaltet sein können.

Aus der EP 345 826 A2 ist eine Bearbeitungsanlage für Werkstücke, wie z.B. PKW-Karossen bekannt, die mindestens eine Bearbeitungslinie hat, die von einer Vielzahl von Bearbeitungsplattformen (fahrerlosen Transportfahrzeugen) gebildet wird, die je einen Eigenantrieb und eine dazugehörige Steuerung haben, die in den Bearbeitungslinien eine Schubverband bilden und die sich in den anderen Bereichen selbstfahrend fortbewegen. Diese Anlage bildet den Oberbegriff des Anspruchs 1. Nachteilig an der Anlage ist, daß die Transportfahrzeuge im Bereich der Bearbeitungslinie auf eine Schiene genommen werden und von einer zentralen Steuerung von außen angetrieben bzw. gebremst werden. Der Eigenantrieb der Transportfahrzeuge ist dabei ausgeschaltet. Dies erfordert für die Montage der Bearbeitungslinien einen relativ hohen Aufwand, da Schienen in den Boden oder den Boden überragend montiert werden müssen, deren Änderung relativ aufwendig ist. Auch sind die Kosten für den externen Antrieb (Beschleunigungsantrieb zum Einschieben des Fahrzeugs am Einlauf, Antrieb (Druck) für Schubverband, Bremsantrieb (Gegendruck) zum Zusammenhalten des Schubverbandes und Auszugsantrieb zum Abziehen des Fahrzeugs an Auslauf) relativ hoch.

Der Erfindung liegt die Aufgabe zugrunde, die genannte Vorrichtung dahingehend zu verbessern, daß die Bearbeitungslinien mit nur geringem Aufwand verändert werden können.

Diese Aufgabe wird erfindungsgemäß dadurch gelöst, daß die fahrerlosen Transportfahrzeuge auch im Schubverband ohne Führungsschienen fahren, daß die fahrerlosen Transportfahrzeuge auch im Schubverband von ihrem eigenen Fahrmotor angetrieben werden und daß die fahrerlosen Transportfahrzeuge auch im Schubverband von ihrer eigenen Steuerung gesteuert werden.

Erfindungsgemäß wird dadurch erreicht, daß auf Schienen, die die Transportplattformen aufnehmen, tragen, führen und deren Geschwindigkeit bestimmen, verzichtet werden kann. Dadurch wird eine hohe Flexibilität im Aufbau der Bearbeitungsanlage erreicht. Da die bekannten fahrerlosen Transportfahrzeuge in den Bereichen außerhalb der Bearbeitungslinien sowieso schon selbstfahrend sind, ist der Aufwand, die Fahrzeuge auch in den Bearbeitungslinien selbstfahrend zu machen, nicht besonders hoch. Es können also die bisher bekannten Fahrzeuge mit nur kleinen Abwandlungen verwendet werden.

Vorteilhaft ist weiterhin, daß die Anlage auch ohne stationäre Podeste betrieben werden kann, ohne daß sicherheitstechnische Probleme auftreten.

Ausgestaltungen der Erfindung sind Gegenstände von Unteransprüchen.

Eine Ausführung der Erfindung wird anhand von sechs Zeichnung näher erläutert. Die Zeichnungen zeigen in
- Fig. 1: eine Bearbeitungsanlage im Schubverband in Draufsicht,
- Fig. 2: einen Schnitt durch eine Bearbeitungslinie 90° zur Fahrtrichtung,
- Fig. 3: ein Detail einer mechanischen Verriegelung zweier FTF,
- Fig. 4: eine andere Möglichkeit der Bildung des Schubverbands,
- Fig. 5+6: zwei verschiedene Steuervarianten für die Geschwindigkeit in der Bearbeitungslinie.

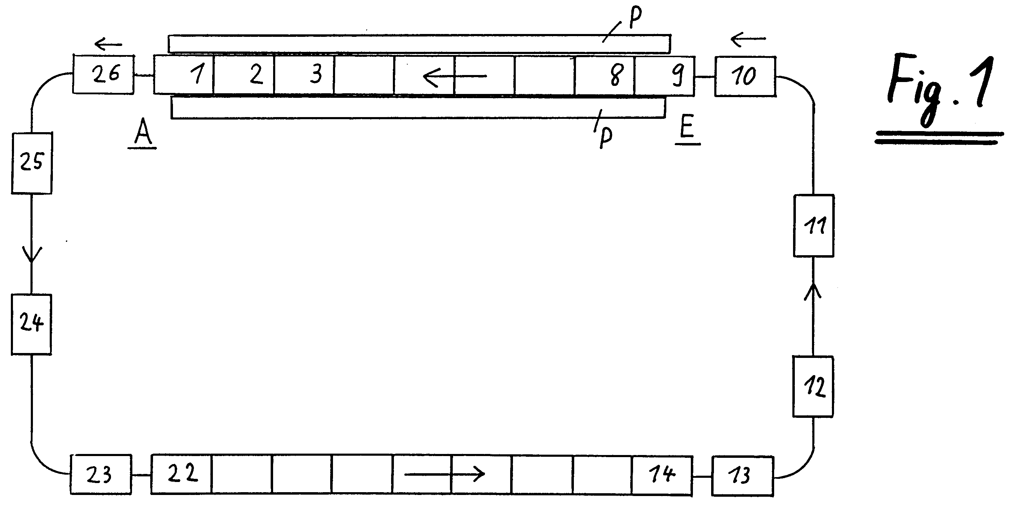

Figur 1 zeigt eine erfindungsgemäße Bearbeitungsanlage mit zwei Bearbeitungslinien, die hier von den fahrerlosen Transportfahrzeugen FTF1 bis FTF9 und FTF14 bis FTF22 gebildet werden. Die in den Bearbeitungslinien fahrenden Transportfahrzeuge FTF1 bis FTF9 fahren lückenlos aneinander in einem Schubverband. Dies gilt auch für die Transportfahrzeuge FTF14 bis FTF22. Die anderen Transportfahrzeuge FTF10 bis FTF13 und FTF23 bis FTF26 befinden sich gerade im Einlauf E oder im Auslauf A einer Bearbeitungslinie oder im Fahrbereich zwischen den zwei Bearbeitungslinien. In diesem Bereich fahren die Fahrzeuge selbststeuernd. Im Ausführungsbeispiel lenken die FTF schienengeführt (an in den Boden eingelassener U-Schiene oder von Hilfsrollen geführt, die die Podestwand abtasten) oder induktiv geführt (Leitdraht). Es ist aber auch möglich, die FTF frei navigierend zu lenken. Die Bearbeitungslinien sind hier von Podesten P begrenzt, auf denen die Werker stehen und das Material zugeführt wird.

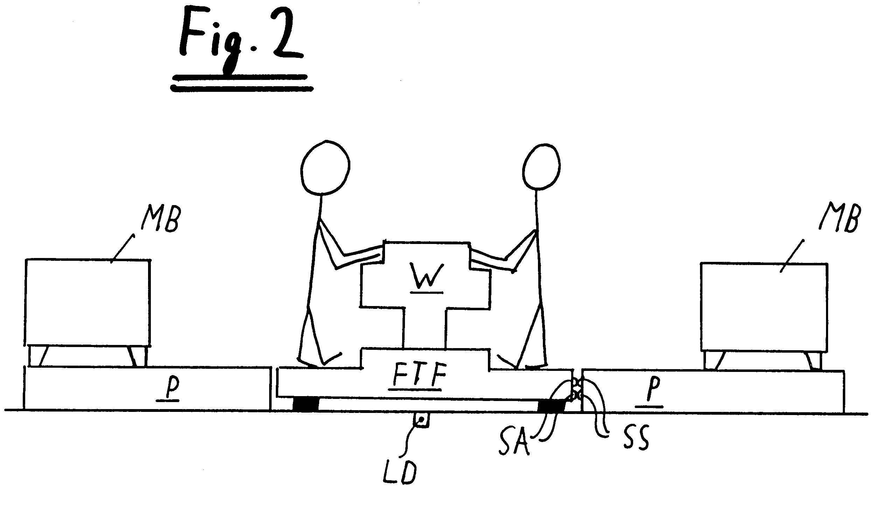

Figur 2 zeigt einen Querschnitt durch eine Bearbeitungslinie. Zwischen den zwei Podesten P mit den Materialboxen MB fährt ein fahrerloses Transportfahrzeug FTF, das das zu bearbeitende Werkstück W trägt. Die Höhe des Fahrzeugs FTF ist der Höhe der hier vorgesehenen Podeste P angepaßt, so daß die Werker ohne Stufen steigen zu müssen vom Fahrzeug zum Podest und umgekehrt treten können. Das Fahrzeug FTF wird hier mittels eines in den Boden eingelassenen Leitdrahts LD gesteuert. Anstelle des Leitdrahts LD (induktive Spurführung) kann auch eine in den Boden eingelassene U-Schiene als mechanische Spurführung dienen oder es kann mittels Hilfsrollen entlang einer Podestkante geführt werden. Seine Energie bezieht das Fahrzeug hier über zwei Stromabnehmer SA, die mobil am FTF angebracht sind und an zwei stationär am Podest P befestigten Stromschienen SS anliegen. Die zugeführte Energie kann entweder zum Aufladen der Bordbatterie eingesetzt (interne Regelung) oder direkt den Fahrmotoren zugeführt (externe Regelung) werden. Erfindungsgemäß fahren die FTF in der Bearbeitungslinie auf ihren eigenen Rädern, werden also nicht auf Schienen zwangsgeführt. Auch der Antrieb der Fahrzeuge erfolgt über den eigenen Fahrantrieb und die eigenen Räder - während beim Stand der Technik der Antrieb durch stationäre Reibrollen an den Podesten erfolgt. Auch die Steuerung der Richtung der Fahrzeuge FTF erfolgt nicht durch Zwangsführung der Plattform sondern nur durch Einwirken von Steuerimpulsen von außen auf die fahrzeugeigene Steuerung - also lenkt das Fahrzeug mit den Rädern und wird nicht von mechanischen Zwangsführungen wie Schienen oder Fahrzeugrand geführt. Die Vorgabe der Richtung kann - wie hier gezeigt - durch induktive Zwangsführung (Leitdraht LD), durch ein passives Leitband (ein auf dem Boden aufgeklebtes Metallband, dessen Lage vom FTF abgetastet wird), die Fahrbahnrandbegrenzung (hier ist zu beachten, daß die Fühler für den Fahrbahnrand nicht auf die Plattform selbst wirken, sondern auf die Steuermechanik des FTF). Ebenso möglich sind mechanische Zwangsführungen (wie eine Schiene), die jedoch ebenfalls nur auf die Lenkmechanik des FTF einwirkt und nicht auf die Gesamtplattform. Ebenso kann die Lenkung innerhalb der Bearbeitungslinie durch freie Navigation erfolgen, wie es auch außerhalb der Bearbeitungslinien vorgegeben ist. Ein beispielhaftes Navigationssystem zur freien Navigation und leitdrahtlosen Führung von fahrerlosen Flurförderzeugen ist aus der EP 391 206 A vorbekannt. Bei Verwendung eines solchen Navigationssystems wären dann auch in der Bearbeitungslinie nur einzelne punktförmige Navigationspunkte notwendig, längs derer sich das FTF fortbewegt.

Jedes Fahrzeug hat also eine Bordsteuerung (Bordrechner). Seine Aufgaben sind: Kommunikation in der stationären Anlagensteuerung, Bedienoberfläche für den Bediener des Fahrzeugs, Zielfindung für das Fahrzeug, Steuerung der Lasthandhabung).

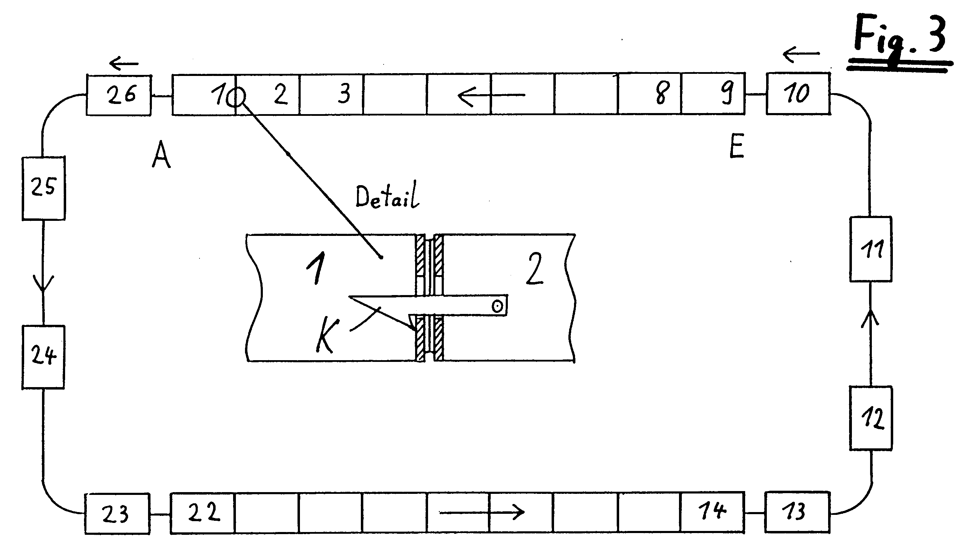

Figur 3 zeigt eine Möglichkeit, wie in den Bearbeitungslinien ein formschlüssiger Schubverband aus mehreren FTF gebildet werden kann. Dies erfolgt hier z.B. dadurch, daß FTF2 mit einer mechanischen Verriegelung, hier der Klinke K, versehen ist, die in eine entsprechende Aussparung des vorherlaufenden FTF1 eingreift und dort einrastet.

Möglich ist hier die Verwendung bekannter mechanischer Verbindungselemente, für die es als Verriegelungen, Klinken oder Kupplungen auf dem Eisenbahnsektor bereits einen breiten Stand der Technik gibt. Die Verriegelung greift z.B. dann, wenn im Einlauf E das FTF10 auf das FTF9 aufschließt und dabei mit höherer Relativgeschwindigkeit seinen Vorderrand an den Hinterrand des FTF9 drückt. Dabei wird die mechanische Verriegelung ausgelöst und bindet FTF10 mechanisch fest an das vorlaufende FTF9. Am Auslauf A der Bearbeitungslinie lösen sich die einzelnen Fahrzeuge wieder voneinander. Hier zieht z.B. das FTF26 vom FTF1 davon. Vorher ist dazu ein Entriegeln der mechanischen Koppelung erfolgt. Das FTF26 beschleunigt dann und fährt entlang des vorgegebenen Weges zur nächsten Bearbeitungslinie (in der sich jetzt die FTF22 bis FTF14 bewegen).

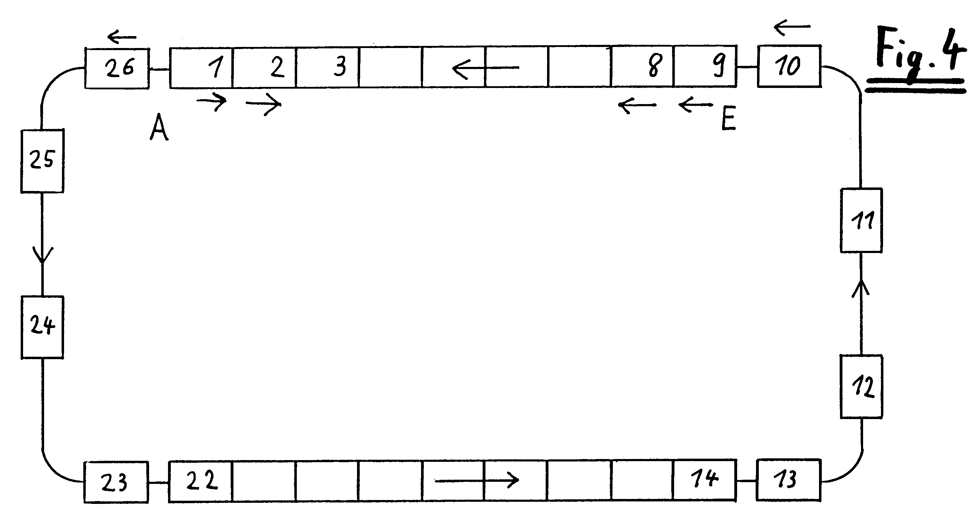

Figur 4 zeigt eine weitere Möglichkeit, wie der Schubverband innerhalb der Bearbeitungslinien gebildet werden kann. In dieser Figur bilden die FTF1 bis FTF9, deren Vorderseiten in ihrer Form den Hinterseiten angepaßt sind, wieder den Schubverband in der Bearbeitungslinie, der hier durch Kraftschluß verbunden ist. Hier erzeugen die einlaufenden FTF, z.B. die beiden hinteren FTF8 und FTF9, durch erhöhte Schubkraft einen Druck auf den Schubverband, der im Auslauf des Schubverbands durch Bremsen der Fahrzeuge FTF1 und FTF2 aufgefangen wird. Die FTF1 und FTF2 erzeugen einen Gegendruck, der zu einem kraftschlüssigen Zusammenhalten des Schubverbandes führt. Die Befehle zum erhöhten Vorwärtsfahren, zur normalen Fahrt (FTF3 bis FTF7) oder zum Bremsen (FTF1 und FTF2) können von der zentralen Anlagensteuerung auf die jeweiligen Fahrzeuge übertragen werden. Die Befehle können also entweder von der stationären Anlagensteuerung dem FTF vorgegeben werden oder aber von der fahrzeugeigenen Bordsteuerung, die aufgrund ihrer "Ortskenntnis" der Anlage selbst weiß, wann das FTF aufschließen oder abziehen muß.

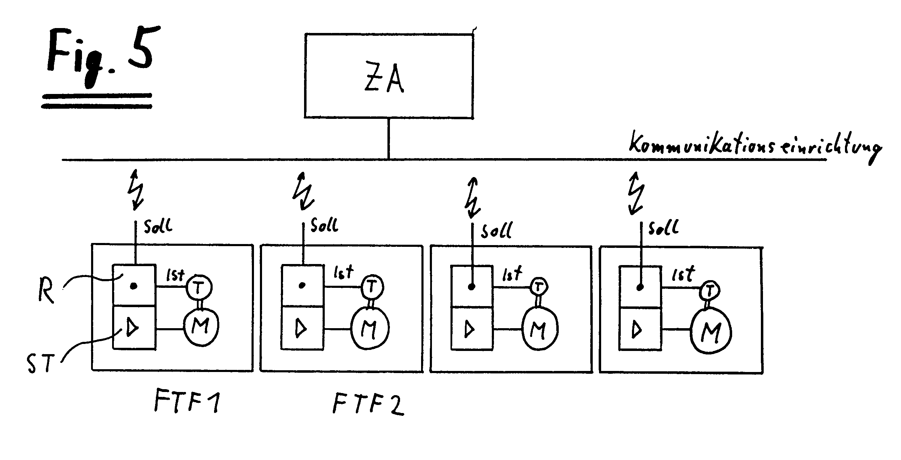

Figur 5 zeigt eine mögliche Geschwindigkeitsregelung des Schubverbands durch eine Regelung innerhalb jedes FTF selbst. Die Führungsgröße Geschwindigkeit wird von der zentralen Anlagensteuerung ZA über eine Kommunikationseinrichtung zum FTF weitergegeben und damit zentral vorgegeben. Angedeutet ist dies durch die Blitze zwischen der stationären Kommunikationseinrichtung und den einzelnen FTF. In diesen FTF sind Empfänger vorgesehen, die die Sollgeschwindigkeit dem Regler R mitteilen, der den Steller ST bedient und Informationen von der Tachomaschine T über die Istgeschwindigkeit erhält. Der Steller ST steuert dann den Fahrmotor M an und gibt im die entsprechende Geschwindigkeit vor. Die Geschwindigkeitsvorgabe kommt in der Regel von der zentralen Anlagensteuerung ZA, da der Bediener dort die Geschwindigkeit des Schubverbandes einstellt (z.B. durch Eingabe einer Produktionsstückzahl je Arbeitsschicht). Diese Sollwertvorgabe kann auch geändert werden, z.B. durch die geänderte Produktionsstückzahl oder durch die selbständige Geschwindigkeitsänderung durch die zentrale Anlagensteuerung ZA, z.B. nach einem Brandstilllstand (Aufholtakt).

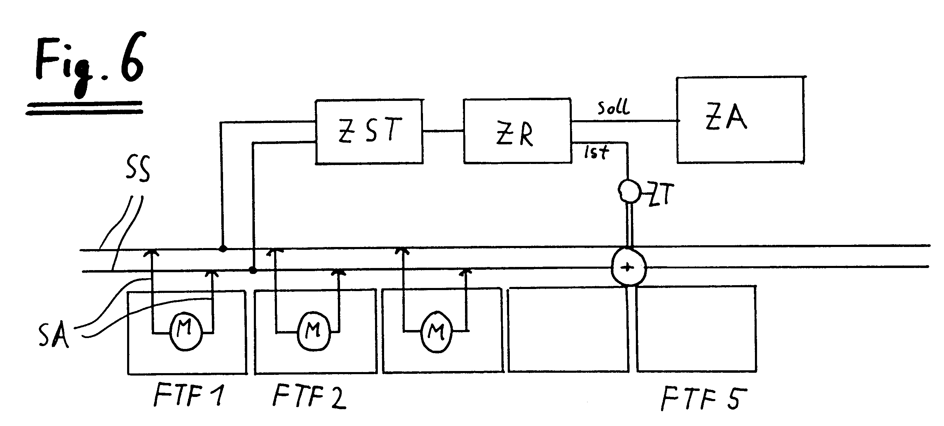

Eine andere Geschwindigkeitssteuerung wird anhand von Figur 6 gezeigt. Dort wird die Geschwindigkeitsregelung durch zentrale Ansteuerung aller FTF vorgenommen. Die zentrale Anlagensteuerung ZA gibt den Sollwert an den zentralen Regler ZR. Dieser verarbeitet die Sollinformation zusammen mit der Istinformation, die er von der zentralen Tachomaschine ZT (hier ein stationär montiertes Meßrad) erhält, und gibt den Sollwert an den zentralen Steller ZST weiter. Dieser gibt entsprechende elektrische Impulse oder Werte an die stationäre Stromschiene SS, an der die mobilen Stromabnehmer SA der einzelnen FTF1 bis FTF26 der Bearbeitungslinie zugreifen. Bei dieser Variante sind die Fahrmotoren der einzelnen FTF1 bis FTF26 auf eine gemeinsame Stromschiene SS geschaltet. Die Fahrmotoren der einzelnen FTF werden also zentral von dem anlageseitigen Regel- und Stellkreis mit der entsprechenden Energie für die gewünschte Fahrtgeschwindigkeit versorgt. Hierbei erweist sich die Drehzahlcharakteristik eines Reihenschlußmotors als besonders geeignet.

Als Einsatzbereiche für die erfindungsgemäße Bearbeitungsanlage sind in erster Linie Montagelinien für PKW-Karossen vorgesehen. Die PKW-Karosse würde dann auf einem FTF mitsamt des zuständigen Werkers durch die entsprechende Bearbeitungslinie fahren. An jeder der verschiedenen Stationen würde der Werker von dem auf den Podesten aufgebrachten Materialboxen MB die entsprechenden Teile entnehmen und dem Werkstück, hier der Karosserie, zufügen. Möglich ist der Einsatz einer solchen Bearbeitungsanlage außer in der Montage auch in der Fertigung anderer Bauteile.

Einsatzbereiche sind z.B.:
- alle Arbeitsfließlinien, bei denen der Werker auf dem FTF mitfahrend an bereitgestellten Teilen vorbeifährt (z.B. Karossenmontage, Motorenfertigung, Achsfertigung, Kompressorfertigung usw.)
- alle Arbeitsfließlinien, bei denen nur das Werkstück fährt und am stationären Arbeitsplatz vorbeikommt (typisches Fließband). In diesem Fall fährt der Werker nicht mit auf dem FTF sondern steht am "Band" oder läuft ein Stück mit (z.B. Kühlschrankmontage).
- Kommissionieranlage. Das FTF ist dann das Kommissionierfahrzeug, auf das die zu kommissionierenden Teile aufgelegt werden, die entlang dem Schubverband als Bereitstellungszone gelagert sind. Danach fährt das FTF zu einem Einzel-Arbeitsplatz, wo die vorher kommissionierten Einzelteile zusammengebaut werden.
- Sortieranlage. Das FTF ist dann das Sortierfahrzeug, auf das die zu sortierenden Teile aufgelegt werden (z.B. große Pakete, Koffer, Behälter unterschiedlicher Größe und Form). An der richtigen Stelle werden dann die Teile vom FTF genommen oder geschoben.

Allgemein gilt, daß sich durch den Gewinn an Flexibilität (Entfall der stationären Rollenschienen und Antriebe, wahlweiser Entfall der Podeste) sich eine Reihe von neuen Einsatzmöglichkeiten, die bisher nicht erschließbar waren, ergeben.

Möglich ist auch die Verwendung als Besucherbahn, für den Personentransport z.B. auf Messen oder in Museen, Ausstellungen oder Vergnügungsparks. Dabei sind auf den einzelnen FTF Sessel montiert. Die Bahn führt an Ausstellungsobjekten vorbei. Die Besucher steigen an einer Stelle auf das FTF, fahren ein Stück mit und steigen an anderer Stelle wieder vom FTF ab. Die FTF können selbständig fahrend sein, entweder im Verband oder alleine fahrend.

## Patentansprüche

1. Bearbeitungsanlage für Werkstücke (W), wie z.B. PKW-Karossen, mit mindestens einer Bearbeitungslinie, die von einer Vielzahl von Bearbeitungsplattformen (fahrerlosen Transportfahrzeugen FTF1 bis FTF26) gebildet wird, die je einen Eigenantrieb und eine dazugehörige Steuerung haben, die in den Bearbeitungslinien einen Schubverband bilden und die sich in den anderen Bereichen selbstfahrend fortbewegen, **dadurch gekennzeichnet**, daß die fahrerlosen Transportfahrzeuge (FTF1 bis FTF9) auch im Schubverband ohne Führungsschienen fahren, daß die fahrerlosen Transportfahrzeuge (FTF1 bis FTF9) auch im Schubverband von ihrem eigenen Fahrmotor (M) angetrieben werden und daß die fahrerlosen Transportfahrzeuge (FTF1 bis FTF9) auch im Schubverband von ihrer eigenen Steuerung (R, ST, T, M) gesteuert werden.

2. Bearbeitungsanlage nach Anspruch 1, dadurch gekennzeichnet, daß die fahrerlosen Transportfahrzeuge (FTF1 bis FTF9) im Schubverband mittels mechanischer Elemente (Verriegelung, Klinke K, Kupplung) formschlüssig miteinander verbunden sind.

3. Bearbeitungsanlage nach Anspruch 1, dadurch gekennzeichnet, daß die fahrerlosen Transportfahrzeug (FTF1 bis FTF9) im Schubverband kraftschlüssig durch Schieben des oder der hinteren (FTF8, FTF9) und Bremsen des oder der vorderen fahrerlosen Transportfahrzeuge (FTF1, FTF2) miteinander verbunden sind.

4. Bearbeitungsanlage nach einem der Ansprüche 1 bis 3, dadurch gekennzeichnet, daß die Geschwindigkeit des Schubverbandes durch separate Regelung (Regler R, Steller ST, Tachomaschine T, Motor M) innerhalb jedes einzelnen FTF geregelt wird.

5. Bearbeitungsanlage nach einem der Ansprüche 1 bis 3, dadurch gekennzeichnet, daß die Geschwindigkeit des Schubverbandes durch zentrale Ansteuerung (ZA, ZST, ZR, ZT) aller beteiligten FTF geregelt wird.

6. Bearbeitungsanlage nach einem der vorhergehenden Ansprüche, dadurch gekennzeichnet, daß die Richtungsvorgabe im Schubverband durch Einwirkung auf die Lenkmechanik des FTF durch induktive Zwangsführung (Leitdraht LD), ein passives Leitband, die Fahrbahnrandbegrenzung, durch eine mechanische Zwangsführung (Schiene) oder durch freie Navigation erfolgt.

## Claims

1. Work plant for workpieces (W), such as, for example, passenger car bodies, with at least one work line which is formed by a multiplicity of work platforms (driverless transport vehicles FTF1 to FTF26) which each have their own drive and an associated control and which form a pushing train in the work lines and advance by self-propulsion in the other regions, characterized in that, in the pushing train too, the driverless transport vehicles (FTF1 to FTF9) travel without guide rails, in that, in the pushing train too, the driverless transport vehicles (FTF1 to FTF9) are driven by their own travel motor (M), and in that, in the pushing train too, the driverless transport vehicles (FTF1 to FTF9) are controlled by their own control (R, ST, T, M).

2. Work plant according to Claim 1, characterized in that, in the pushing train, the driverless transport vehicles (FTF1 to FTF9) are positively connected to one another by means of mechanical elements (interlock, pawl K, coupling).

3. Work plant according to Claim 1, characterized in that, in the pushing train, the driverless transport vehicles (FTF1 to FTF9) are connected non-positively to one another by pushing the rear driverless transport vehicle or vehicles (FTF8, FTF9) and braking the front driverless transport vehicle or vehicles (FTF1, FTF2).

4. Work plant according to one of Claims 1 to 3, characterized in that the speed of the pushing train is regulated within each individual FTF by separate regulation (regulator R, controller ST, tacho-generator T, motor M).

5. Work plant according to one of Claims 1 to 3, characterized in that the speed of the pushing train is regulated by central control (ZA, ZST, ZR, ZT) of all the FTF involved.

6. Work plant according to one of the preceding claims, characterized in that the direction is preset in the pushing train by action on the steering mechanism of the FTF by inductive restricted guidance (lead wire LD), a passive guide strip, runway edge limitation, mechanical restricted guidance (rail) or free navigation.

## Revendications

1. Installation pour l'usinage de pièces (W), telles que les carrosseries de voitures, avec au moins une ligne d'usinage, constituée d'une pluralité de plate-formes d'usinage (véhicules de transport sans conducteur FTF1 à FTF26) ayant chacune un entraînement propre avec une commande, qui forment dans les lignes d'usinage un convoi poussé et qui se déplacent d'elles-mêmes dans les autres zones, caractérisée en ce que les véhicules de transport sans conducteur (FTF1 à FTF9) évoluent également en convoi poussé sans rail de guidage, en ce que les véhicules de transport sans conducteur (FTF1 à FTF9) sont entraînés également en convoi poussé par leur propre moteur (M) et en ce que les véhicules de transport sans conducteur (FTF1 à FTF9) sont guidés par leur propre commande (R, ST, T, M) en convoi poussé.

2. Installation pour l'usinage de pièces suivant la revendication 1, caractérisée en ce que les véhicules de transport sans conducteur (FTF1 à FTF9) sont, en convoi poussé, reliés par engagement positif l'un à l'autre au moyen d'éléments mécaniques (dispositif de verrouillage, levier à cliquet K, attelage).

3. Installation pour l'usinage de pièces suivant la revendication 1, caractérisée en ce que les véhicules de transport sans conducteur (FTF1 à FTF9) sont, en convoi poussé, reliés l'un à l'autre par friction par poussée du ou des véhicules arrière (FTF8, FTF9) de transport sans conducteur et freinage du ou des véhicules avant (FTF1, FTF2) de transport sans conducteur.

4. Installation pour l'usinage de pièces suivant l'une quelconque des revendications 1 à 3, caractérisée en ce que l'ajustage de la vitesse du convoi poussé s'effectue par réglage séparé (régulateur R, vérin ST, tachymètre T, moteur M) au sein de chacun des FTF.

5. Installation pour l'usinage de pièces suivant l'une quelconque des revendications 1 à 3, caractérisée en ce que la vitesse du convoi poussé est réglée par commande centrale (ZA, ZST, ZR, ZT) de tous les FTF qui en font partie.

6. Installation pour l'usinage de pièces suivant l'une quelconque des revendications précédentes, caractérisée en ce que l'indication d'orientation dans le convoi poussé est donnée en egissant sur le mécanisme de guidage du FTF par guidage forcé inductif (fil conducteur LD), une bande de guidage passive, la limitation du bord de la glissière, par un guidage forcé mécanique (rail) ou par libre déplacement.
